(19) Europäisches Patentamt / European Patent Office / Office européen des brevets

(11) **EP 3 527 953 B1**

(12) **EUROPEAN PATENT SPECIFICATION**

(45) Date of publication and mention
of the grant of the patent:
**20.07.2022 Bulletin 2022/29**

(21) Application number: **18382082.8**

(22) Date of filing: **14.02.2018**

(51) International Patent Classification (IPC):
***G01D 5/38*** *(2006.01)*

(52) Cooperative Patent Classification (CPC):
**G01D 5/38**

(54) **METHODS TO CALCULATE THE SHAPE OF A MASK SLOTS OF AN OPTICAL INCREMENTAL ENCODER**

VERFAHREN ZUR BERECHNUNG DER FORM VON MASKENSCHLITZEN EINES OPTISCHEN INKREMENTALGEBERS

PROCÉDÉS POUR CALCULER LA FORME D'UNE FENTE DE MASQUE D'UN CODEUR INCRÉMENTAL OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.08.2019 Bulletin 2019/34**

(73) Proprietor: **Hohner Automation S.L.**
**17400 Breda (Girona) (ES)**

(72) Inventors:
• **BRUGUERA PRUNA, Josep**
**17400 BREDA (Girona) (ES)**
• **BRUNA FLORIS, Joaquim**
**17400 BREDA (Girona) (ES)**

• **COSTA JIMENO, Nestor**
**17400 BREDA (Girona) (ES)**
• **TIKHONOV, Sergey Yu**
**17400 BREDA (Girona) (ES)**

(74) Representative: **Gallego Jiménez, José Fernando**
**Ingenias Creaciones, Signos e Invenciones S.L.**
**Avda. Diagonal 514, 1o 4a**
**08006 Barcelona (ES)**

(56) References cited:
**EP-A1- 0 547 270      EP-A2- 0 714 015**
**EP-A2- 1 439 375      JP-A- 2007 183 251**
**US-A- 3 674 372       US-A- 5 994 692**
**US-A1- 2007 028 476   US-A1- 2007 187 581**

## Description

Technical Field

The present invention is directed, in general, to the field of optical encoders. In particular, the invention relates to a method to calculate the shape of mask slots of an optical incremental encoder.

Encoders are devices that provide the position and the speed of a rotating axis, the accuracy depending on the encoder's resolution.

Background of the Invention

Patent application document EP 0714015 A2 describes an optical encoder having first and second scales arranged in parallel with each other to be relatively movable, a light source and light detecting means, wherein one of the first and second scales has a uniform grating and the other of the first and second scales has a non-uniform grating. Patent document US 3,674,372 describes an apparatus for measuring position change of two parts moving with respect to each other, comprising a photoelectric grating-scanning system with relatively movable gratings intersecting an optical axis. Patent application document US 2007/0028476 A1 describes a position measuring instrument for detecting a relative position, the position measuring instrument comprising: a scale comprising a measuring graduation; a scanning unit that can be moved so as to generate a resultant scanning signal. Patent application document US 2007/0187581 A1 describes an optical encoder comprising: an incoherent light source; a first grating which is an amplitude grating; a second grating which is a phase grating; a third grating which is an amplitude grating; and a light detecting element for detecting light from the third grating. Patent document US 5,994,692 describes a photo-electric position measuring system comprising: a source of light; a first grating; a second grating displaceable with respect to the first grating in a measuring direction; and a plurality of photo-detectors located downstream of the second grating; wherein at least one of said first or second grating has at least a first and a second transverse grating areas disposed adjacent to one another in the measuring direction. Patent application document EP 0547270 A1 describes a photoelectric device for generating signals with a measuring standard having a measuring graduation with a two-dimensional binary structure and at least one scanning device. Patent application document EP 1439375 A2 describes an optical encoder comprising: an emitter including, a light source, a detector to detect and process light into an output signal; and a coding element having spaces and markings. Patent application document JP 2007183251 (A) describes that in a three-grating type photoelectric encoder equipped with a second grating formed on a scale and first and third gratings disposed on the detection part side, a part of at least the first grating is shifted in the measuring axis direction.

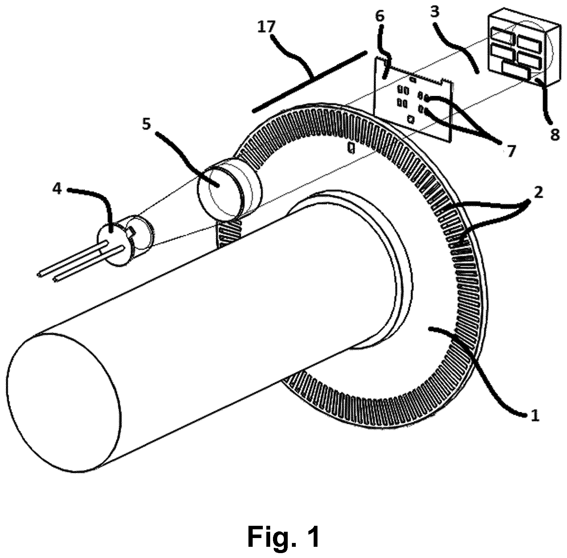

Fig. 1 illustrates a basic scheme of an incremental optical encoder. The rotating disk 1 has N rectangular slots 2 in its periphery allowing light to go through, the remaining part being opaque. That is, the angle between two consecutive slots is $\alpha = \dfrac{2\pi}{N}$ radians.

The value of N is what is called the optical resolution. An incident beam 3 of light emanating from a light source 4, in this case collimated by a convergent lens 5, goes through them and reaches a fixed (non-rotating) mask 6 with other built-in slots 7. The amount of light intensity passing through the slots in the rotating disk 1 and in the mask 6 changes as the rotating disk 1 rotates with time t and can be measured by a set of photodiodes 8 that generate a periodic pulse $S(t)$.

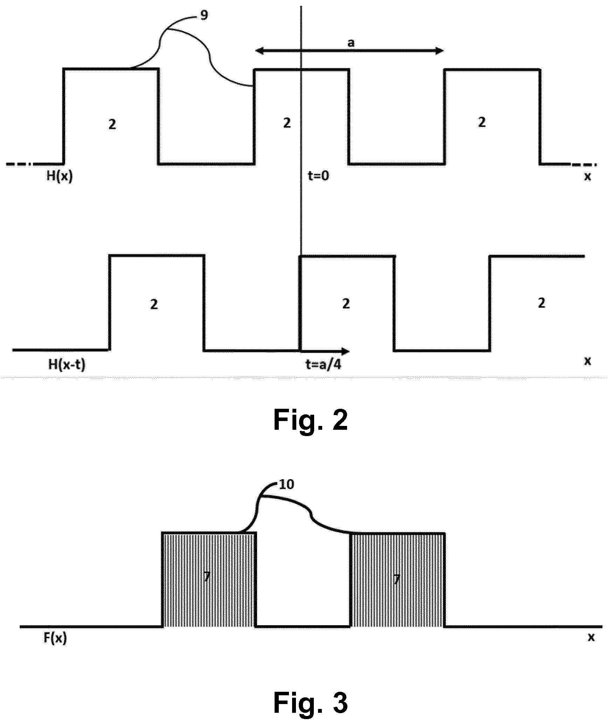

To describe $S(t)$, for simplicity the effects of the diffraction that occurs in the rotating disk 1 are ignored. The rectangular slots in the rotating disk 1 are modeled by a periodic train $H(x)$ of rectangular impulses 9; see the first of the figures in Fig. 2. The slots 2 correspond to the region under the graphic of H; the rotation of the rotating disk 1 (at constant speed) means replacing $H(x)$ by $H(x - t)$; this is the second of the figures in Fig. 2.

Next, the slots 7 in the mask 6 are modeled analogously by a function F; if they are also rectangular as those in the rotating disk 1, $F$ is a function with a finite number of impulses 10 (two in Fig. 3). Again, the slots 7 in the mask 6 correspond to the region below the graphic of F.

The intensity of light going through the rotating disk 1 and the mask 6 is then proportional to the area 11 of the region obtained by superposing the graphs of H,F.

In mathematical terms, the signal S(t) is the so-called *convolution* of H, F

$$S(t) = (H * F)(t) = \int H(x - t)F(x)\,dx$$

Suppose $F$ as in Fig. 3. If say at time t= 0 the slots 2 in the rotating disk 1 overlap with opaque parts of the mask 6 (where $F(x)$ = 0), this area is zero and S(0) = 0, this is illustrated in Fig. 4. In the opposite case, when the positions of the slots 2 in the rotating disk 1 overlap with the slots 7 in the mask 6, this area is maximum, as shown in Fig. 5. Between these two extreme cases, the area changes linearly. This means that in this case- when slots 7 in the mask 6 are also rectangular- the signal $S(t)$ will be a periodic train of N triangular impulses 12 for each rotation, as shown in Fig. 6.

In fact, other three signals like $S(t)$ are generated in a similar way for robust purposes. This periodic pulse S(t) codes the position of the rotating disk 1 as soon as a reference signal $Z$ is produced for each turn. The way these other three signals and $Z$ are generated is well-known and will not be mentioned here.

Once the signal $S(t)$ has been optically generated, a second part of the process consists in its processing by electronic means to increase the resolution by a big factor $\mu$. Each output signal can be electronically interpolated, multiplying the resolution by the factor $\mu$, thus achieving a final resolution of $\mu N$. The way this is done will not be described here as it is the object of a number of active patents.

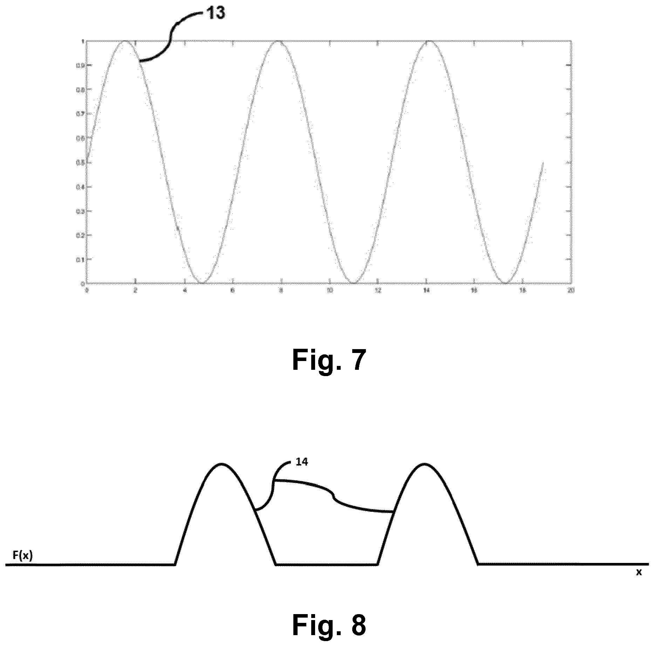

In the existing electronical interpolation algorithms the more sinusoidal the signal is the better interpolation quality will be achieved for high values of $\mu$, like in Fig. 7. However, this raises the problem of finding the shape that the slots 7 in the mask 6 should have so that the resulting signal S(t) consists in a periodic train of sinusoidal pulses 13 instead of triangular ones 12. In the past this has been approached simply by experimenting with different kind of shapes, with only poor approximate results.

In mathematical terms the question is to find and describe all positive functions $F$ such that the convolution $F * H$ equals a pure sinusoidal function. Present invention involves the determination of two solutions of this problem, that is, the determination of two shapes that slots 7 in the mask 6 should have to obtain exactly a sinusoidal signal S(t) like 13.

Description of the Invention

According to the invention, two alternative methods are provided to calculate the shape of mask slots of an optical incremental encoder, whereby the first method is defined in claim 1, and the second method is defined in claim 4.

Both methods comprise,

as known in the field:

- emitting, by a light source, a light beam, said light beam being collimated by a lens and reaching a rotating disk producing a diffraction effect, said rotating disk being positioned perpendicular to a rotating axis, fixed to the latter, and rotating at a same velocity, said rotating disk having a first part in the periphery thereof comprising a plurality of disk slots having a rectangular shape allowing light to go through and a second part not allowing the light to go through;
- receiving, by a mask positioned at a certain distance after the rotating disk and comprising a plurality of mask slots with a particular shape the light diffracted by the rotating disk;
- generating, by an optoelectronic unit, a periodic signal with a given first resolution using an amount of light reaching the optoelectronic unit, said amount of light being dependent on the rotation of the rotating disk; and
- converting, by the optoelectronic unit, said generated periodic signal into an electronic pulse which is processed to obtain a final output with a given second resolution, said final output being used to calculate the speed of the rotating axis.

Unlike the proposals known in the field, in the proposed methods, the shape of the mask slots is calculated by performing a Fourier transform on a convolution equation relating a function $H$ and a function F, and a sinusoidal function, either ignoring or considering the effects of diffraction occurring in the rotating disk, so that said generated periodic signal being a pure sinusoidal signal. The function H defines the rectangular shape of the disk slots whereas the function F defines the shape of the mask slots.

According to the first alternative method defined in claim 1, the effects of diffractions occurring in the rotating disk are ignored, and the following equation $(F * H)(t) = \int F(x) H(x - t)dx = c(1 + \sin Nt)$ is used, in which only the positive part of the sinusoidal function is considered.

According to the second alternative method defined in claim 4, the effects of diffractions occurring in the rotating disk are considered, and the following equation $(H * Kd * F)(t) = c(d) + A(d) \sin Nt$ is used, in which the positive and the negative parts of the sinusoidal function are considered.

According to the proposed methods, the emitting of the light beam can include emitting the light beam from a light-emitting diode or a laser diode.

Brief Description of the Drawings

The previous and other advantages and features will be more fully understood from the following detailed description of embodiments, with reference to the attached figures, which must be considered in an illustrative and non-limiting manner, in which:

Fig. 1 is a basic scheme of an optical incremental encoder.
Fig. 2 illustrates an example of a train of rectangular impulses and its translate.
Fig. 3 is an example of rectangular slots in a mask.

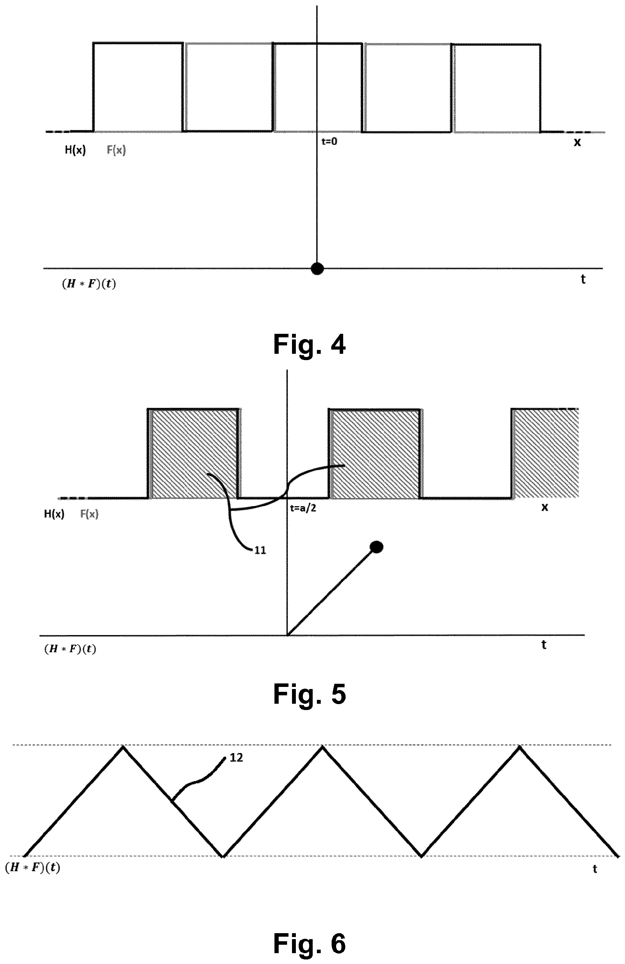

Fig. 4 is an example of a zero overlap.
Fig. 5 is an example of a maximum overlap.
Fig. 6 illustrates an example of a train of triangular impulses.
Fig. 7 illustrates an example of a pure sinusoidal signal.
Fig. 8 illustrates the function F obtained by keeping just the positive part of the sinusoidal function.

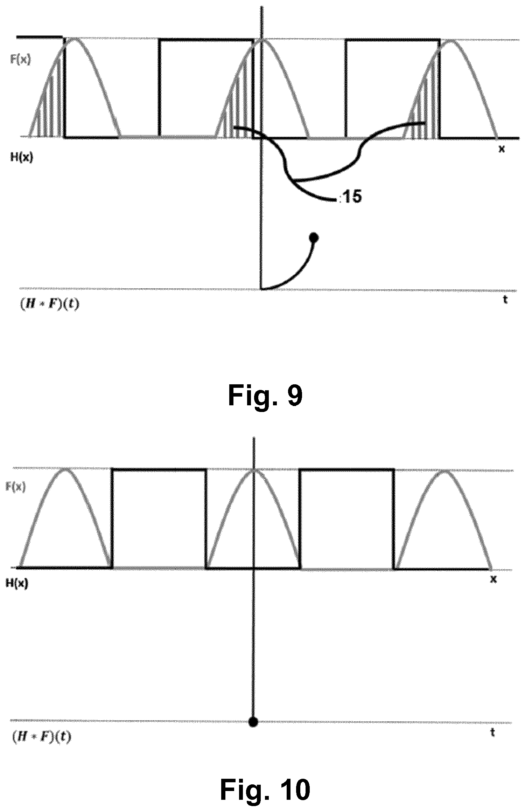

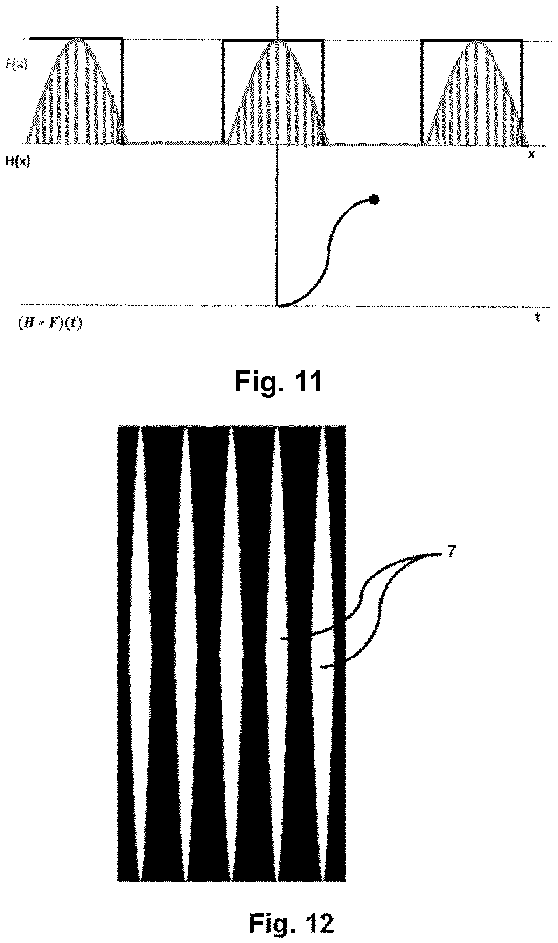

Figs. 9-11, illustrate the convolution performed in the first solution. Fig. 9 illustrates the convolution between the disk H and the F 18 given in Fig. 8; Fig. 10 illustrates the convolution with no overlap; and Fig. 11 illustrates the convolution with maximum overlap.
Fig. 12 illustrates the mask given by the first solution.

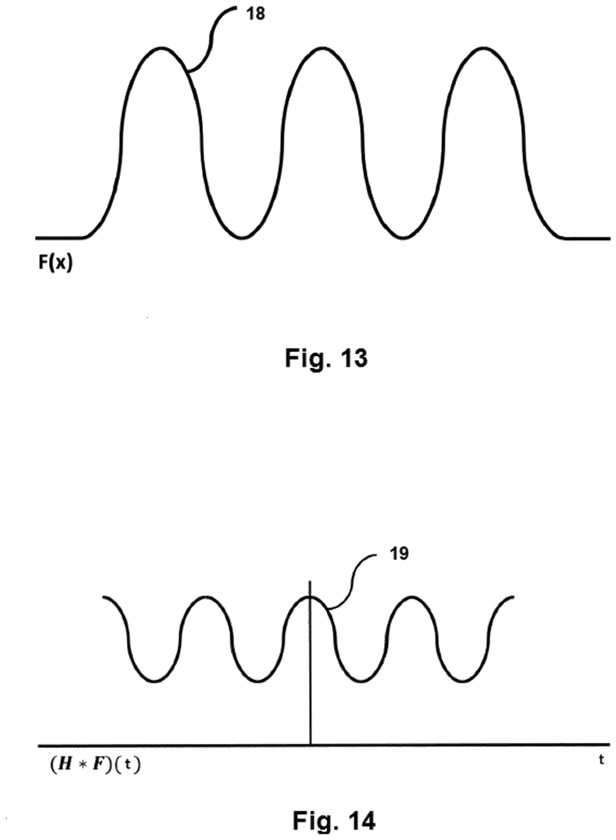

Fig. 13 illustrates the convolution performed by the second solution.

Fig. 14 illustrates the sinusoidal signal S(t) given by the second solution.

Detailed Description of Preferred Embodiments

The proposed invention provides two alternative methods to calculate the shape of mask slots of an optical incremental encoder.

The proposed optical incremental encoder, such as the one shown in Fig. 1, comprises mask slots 7 having a shape calculated by performing a Fourier transform on a convolution equation between a function H, defining the rectangular shape of the disk slots 2 of the rotating disk 1 and a function F, defining the shape of the mask slots 7, either ignoring or considering the effects of diffraction occurring in the rotating disk 1. Consequently, the sinusoidal signal S(t) being a pure sinusoidal signal. To achieve the latter, present invention provides two possible embodiments, or solutions.

According to a first embodiment, or first solution, namely ignoring the effects of diffraction, present invention approach is based on a mathematical analysis of the following equation $(F * H)(t) = \int F(x) H(x - t) dx = c(1 + \sin Nt)$ using the Fourier transform, which is the preferable tool to deal with convolution equations. Present invention analysis reveals moreover that this shape is unique, up to trivial modifications.

It turns out to be the right shape is given by the function F obtained by keeping just the positive part of a sinusoidal function as shown in Fig. 8, with some number of impulses 14. Fig. 9, 10 and 11 illustrate the convolution in this case. Again, the amount of light intensity captured by the optoelectronic unit 8 is proportional to the common area 15 determined by $H(x - t)$ and $F(x)$ in Fig. 9, but in this case does not change linearly. When there is no overlap at all between the slots of the rotating disk 1 and the mask 6 (Fig. 10) this area is zero and S(0) = 0. When the overlap is perfect (Fig. 11) the value of S is maximum. In between, the relevant point is that it changes not linearly as before, but as a sinusoidal function. Altogether, the final output is a pure sinusoidal signal, as desired.

Fig. 12 shows a mask 6 with slots 7 having this shape. The slots 7 have been duplicated symmetrically with respect the horizontal axes to increase intensity.

According to a second embodiment, or second solution, when light diffracts in a screen with apertures (slots) given by a function H, it is well-known in diffraction theory that the light disturbance $I_d$ at a distance $d$ from the screen is given by the convolution of $H$ with a Helmholtz kernel $K_d$, $I_d = H * K_d$. It is also well-know that in case $H$ is periodic, the intensity $I_d$ is up to constants equal to H when $d$ is an integer multiple of the so-called Talbot distance. This means that when the distance 17 between the rotating disk 1 and the mask fulfills that condition, the model described above, ignoring the diffraction, is accurate. As a consequence, the first solution provided in the first embodiment will have the desired effect of a pure sinusoidal signal $S(t)$ for some values of the critical distance 17.

However, encoders often work in situations exposed to high pressures, vibrations, etc., that might perturb the value of the distance 17. When this occurs the model used in the first embodiment ceases to be accurate and as a consequence, the resulting signal S(t) obtained using the first solution is no longer an exact sinusoidal function. To solve the latter, in the second embodiment, the shape of the slots 7 in the mask 6 are determined by considering that the function $H$ must be changed to $H * K_d$ if diffraction effects are taken into account. So, in this second embodiment, the equation of function F modeling the slots 7 satisfies:

$$(H * Kd * F)(t) = c(d) + A(d) \sin Nt$$

The solution turns out to be the function F consisting in a finite number of impulses 18, as in Fig. 13, in the shape of a shifted sinusoidal, $F(x) = 1 + \sin Nt$. The signal S(t) generated when the mask 6 is given by this second solution is the sinusoidal signal 19 in Fig.14.

The light source 4 of the proposed optical incremental encoder, in any of the described solutions, is preferably monochromatic. Besides, the light source 4 can be a light-emitting diode (LED) or a laser. Both the LED and the laser may work at different wavelengths. Moreover, preferably, the shape of the mask slots 7 is lower than the rectangular shape 2 of the disk slots.

The scope of the present invention is defined in the following set of claims.

**Claims**

1.  A method to calculate the shape of mask slots of an optical incremental encoder, comprising:

    emitting, by a light source (4), a light beam (3), said light beam being collimated by a lens (5) and reaching a rotating disk (1) producing a diffraction effect, said rotating disk (1) being positioned perpendicular to a rotating axis, fixed to the latter, and rotating at a same velocity, said rotating disk (1) having a first part in the periphery thereof comprising a plurality of disk slots (2) having a rectangular shape allowing light to go through and a second part not allowing the light to go through;
    receiving, by a mask (6) positioned at a certain distance (17) after the rotating disk (1) and comprising a plurality of mask slots (7) with a particular shape, the light diffracted by the rotating disk (1); and
    generating, by an optoelectronic unit (8), a periodic signal with a given first resolution using an amount of light reaching the optoelectronic unit (8) after having passed through the rotating disk (1) and the mask (6), said amount of light being dependent on the rotation of the rotating disk (1); and

**characterized in that** the method further comprises:

converting, by the optoelectronic unit (8), said generated periodic signal into an electronic pulse which is processed to obtain a final output with a given second resolution, said final output being used to calculate the speed of the rotating axis; and **in that** the shape of the mask slots (7) is calculated by performing a Fourier transform on a convolution equation relating a function H, a function F and a sinusoidal function, by ignoring the effects of diffraction occurring in the rotating disk (1), so that said generated periodic signal being a pure sinusoidal signal, where the function H defines the rectangular shape of the disk slots (2) and the function F defines the shape of the mask slots (7), wherein said calculation of the shape of the mask slots (7) being performed by using the following equation $(F * H)(t) = \int F(x)\,H(x - t)dx = c(1 + \sin Nt)$, in which only the positive part of the sinusoidal function is considered, where $c$ is a constant, and $N$ is the first resolution of the generated periodic signal.

2. The method of claim 1, wherein the emitting of the light beam (3) includes emitting the light beam (3) from a light-emitting diode or a laser diode.

3. The method of any of claims 1 to 2, wherein the generating of the periodic signal including generating the periodic signal from a set of photodiodes.

4. A method to calculate the shape of mask slots of an optical incremental encoder, comprising:

emitting, by a light source (4), a light beam (3), said light beam being collimated by a lens (5) and reaching a rotating disk (1) producing a diffraction effect, said rotating disk (1) being positioned perpendicular to a rotating axis, fixed to the latter, and rotating at a same velocity, said rotating disk (1) having a first part in the periphery thereof comprising a plurality of disk slots (2) having a rectangular shape allowing light to go through and a second part not allowing the light to go through;
receiving, by a mask (6) positioned at a certain distance (17) after the rotating disk (1) and comprising a plurality of mask slots (7) with a particular shape, the light diffracted by the rotating disk (1); and
generating, by an optoelectronic unit (8), a periodic signal with a given first resolution using an amount of light reaching the optoelectronic unit (8) after having passed through the rotating disk (1) and the mask (6), said amount of light being dependent on the rotation of the rotating disk (1); and

**characterized in that** the method further comprises:

converting, by the optoelectronic unit (8), said generated periodic signal into an electronic pulse which is processed to obtain a final output with a given second resolution, said final output being used to calculate the speed of the rotating axis; and **in that** the shape of the mask slots (7) is calculated by performing a Fourier transform on a convolution equation relating a function H, a function F and a sinusoidal function, by considering the effects of diffraction occurring in the rotating disk (1), so that said generated periodic signal being a pure sinusoidal signal, where the function H defines the rectangular shape of the disk slots (2) and the function F defines the shape of the mask slots (7), wherein said calculation of the shape of the mask slots (7) being performed by using the following equation $(H * Kd * F)(t) = c(d) + A(d)\sin Nt$, in which the positive and the negative parts of the sinusoidal function are considered, where $c(d)$ is a constant which depends on the distance between the mask (6) and the rotating disk (1) taking into account the diffraction effects, A(d) is the amplitude which depends on the distance between the mask (6) and the disk (1), and $N$ is the first resolution of the generated periodic signal.

5. The method of claim 4, wherein the emitting of the light beam (3) includes emitting the light beam (3) from a light-emitting diode or a laser diode.

6. The method of any of claims 4 to 5, wherein the generating of the periodic signal including generating the periodic signal from a set of photodiodes.

**Patentansprüche**

1. Verfahren zum Berechnen der Form von Maskenschlitzen eines optischen inkrementellen Codierers, das Folgendes umfasst:

Emittieren durch eine Lichtquelle (4) eines Lichtstrahls (3), wobei der Lichtstrahl von einer Linse (5) kollimiert wird und eine rotierende Scheibe (1) erreicht, die einen Beugungseffekt erzeugt, wobei die rotierende Scheibe (1) senkrecht zu einer rotierenden Achse positioniert ist, die an der Letzteren befestigt ist, und die mit derselben Geschwindigkeit rotiert, wobei die rotierende Scheibe (1) ein erstes Teil in ihrem Umfang aufweist, das eine Vielzahl von Scheibenschlitzen (2) umfasst, die eine rechteckige Form aufweisen, die es Licht erlaubt durchzugehen, und ein zweites Teil, das es Licht nicht erlaubt durchzugehen;

Empfangen durch eine Maske (6), die in einem bestimmten Abstand (17) nach der rotierenden Scheibe (1) positioniert ist und die eine Vielzahl von Maskenschlitzen (7) mit einer besonderen Form aufweist, des Lichts, das von der rotierenden Scheibe (1) gebeugt wird; und

Generieren durch eine optoelektronische Einheit (8) eines periodischen Signals mit einer gegebenen ersten Auflösung unter Verwenden einer Lichtmenge, die die optoelektronische Einheit (8) erreicht, nachdem sie durch die rotierende Scheibe (1) und die Maske (6) durchgegangen ist,

wobei die Lichtmenge von der Rotation der rotierenden Scheibe (1) abhängt; und **dadurch gekennzeichnet, dass** das Verfahren weiter Folgendes umfasst:

Umwandeln durch die optoelektronische Einheit (8) des generierten periodischen Signals in einen elektronischen Impuls, der verarbeitet wird, um eine abschließende Ausgabe mit einer gegebenen zweiten Auflösung zu erhalten, wobei die abschließende Ausgabe dazu verwendet wird, die Drehzahl der rotierenden Achse zu berechnen; und dass

die Form der Maskenschlitze (7) durch Ausführen einer Fourier-Transformierten auf einer Faltungsgleichung berechnet wird, die eine Funktion H, eine Funktion *F* sowie eine Sinusfunktion in Beziehung setzt, indem die Beugungseffekte, die in der rotierenden Scheibe (1) auftreten, derart ignoriert werden, dass das generierte periodische Signal ein reines Sinussignal ist, wobei die Funktion H die rechteckige Form der Scheibenschlitze (2) definiert, und die Funktion F die Form der Maskenschlitze (7) definiert, wobei die Berechnung der Form der Maskenschlitze (7) ausgeführt wird, indem die folgende Gleichung $(F * H)(t) = \int F(x)H(X - T)dx = c(1 + \sin Nt)$ verwendet wird, in der nur der positive Teil der Sinusfunktion berücksichtigt wird, wobei c eine Konstante ist und N die erste Auflösung des generierten periodischen Signals ist.

2. Verfahren nach Anspruch 1, wobei das Emittieren des Lichtstrahls (3) das Emittieren des Lichtstrahls (3) aus einer Licht emittierenden Diode oder einer Laserdiode beinhaltet.

3. Verfahren nach einem der Ansprüche 1 bis 2, wobei das Generieren des periodischen Signals das Generieren des periodischen Signals aus einem Satz von Fotodioden beinhaltet.

4. Verfahren zum Berechnen der Form von Maskenschlitzen eines optischen inkrementellen Codierers, das Folgendes umfasst:

Emittieren durch eine Lichtquelle (4) eines Lichtstrahls (3), wobei der Lichtstrahl von einer Linse (5) kollimiert wird und eine rotierende Scheibe (1) erreicht, die einen Beugungseffekt erzeugt, wobei die rotierende Scheibe (1) senkrecht zu einer rotierenden Achse positioniert ist, die an der Letzteren befestigt ist, und die mit derselben Geschwindigkeit rotiert, wobei die rotierende Scheibe (1) ein erstes Teil in ihrem Umfang aufweist, das eine Vielzahl von Scheibenschlitzen (2) umfasst, die eine rechteckige Form aufweisen, die es Licht erlaubt durchzugehen, und ein zweites Teil, das es Licht nicht erlaubt durchzugehen;

Empfangen durch eine Maske (6), die in einem bestimmten Abstand (17) nach der rotierenden Scheibe (1) positioniert ist und die eine Vielzahl von Maskenschlitzen (7) mit einer besonderen Form aufweist, des Lichts, das von der rotierenden Scheibe (1) gebeugt wird; und

Generieren durch eine optoelektronische Einheit (8) eines periodischen Signals mit einer gegebenen ersten Auflösung unter Verwenden einer Lichtmenge, die die optoelektronische Einheit (8) erreicht, nachdem sie durch die rotierende Scheibe (1) und die Maske (6) durchgegangen ist, wobei die Lichtmenge von der Rotation der rotierenden Scheibe (1) abhängt; und **dadurch gekennzeichnet,**

**dass** das Verfahren weiter Folgendes umfasst:

Umwandeln durch die optoelektronische Einheit (8) des generierten periodischen Signals in einen elektronischen Impuls, der verarbeitet wird, um eine abschließende Ausgabe mit einer gegebenen zweiten Auflösung zu erhalten,

wobei die abschließende Ausgabe dazu verwendet wird, die Drehzahl der rotierenden Achse zu berechnen; und dadurch, dass

die Form der Maskenschlitze (7) durch Ausführen einer Fourier-Transformierten auf einer Faltungsgleichung berechnet wird, die eine Funktion H, eine Funktion F sowie eine Sinusfunktion in Beziehung setzt, indem die Beugungseffekte, die in der rotierenden Scheibe (1) auftreten, derart berücksichtigt werden, dass das generierte periodische Signal ein reines Sinussignal ist, wobei die Funktion *H* die rechteckige Form der Scheibenschlitze (2) definiert, und die Funktion Fdie Form der Maskenschlitze (7) definiert, wobei die Berechnung der Form der Maskenschlitze (7) unter Verwenden der folgenden Gleichung *(H ∗ Kd ∗ F)(t) = c(d) + A(d)* sin *Nt* ausgeführt wird, wobei der positive Teil und der negative Teil der Sinusfunktion berücksichtigt werden, wobei c(d) eine Konstante ist, die von dem Abstand zwischen der Maske (6) und der rotierenden Scheibe (1) abhängt,

wobei die Beugungseffekte berücksichtigt werden, *A(d)* eine Amplitude ist, die von dem Abstand zwischen der Maske (6) und der Scheibe (1) abhängt, und N die erste Auflösung des generierten periodischen Signals ist.

5. Verfahren nach Anspruch 4, wobei das Emittieren des Lichtstrahls (3) das Emittieren des Lichtstrahls (3) von einer Licht emittierenden Diode oder einer Laserdiode beinhaltet.

6. Verfahren nach einem der Ansprüche 4 bis 5, wobei das Generieren des periodischen Signals das Generieren des periodischen Signals aus einem Satz von Fotodioden beinhaltet.

## Revendications

1. Procédé pour calculer la forme de fentes de masque d'un codeur incrémental optique, comprenant :

l'émission, par l'intermédiaire d'une source de lumière (4), d'un faisceau lumineux (3), ledit faisceau lumineux étant collimaté par une lentille (5) et atteignant un disque rotatif (1) produisant un effet de diffraction, ledit disque rotatif (1) étant positionné perpendiculairement à un axe de rotation, fixée à ce dernier, et tournant à la même vitesse, ledit disque rotatif (1) ayant une première partie dans sa périphérie comprenant une pluralité de fentes de disque (2) ayant une forme rectangulaire permettant à la lumière de passer à travers et une seconde partie ne permettant pas à la lumière de passer à travers ;

la réception, par l'intermédiaire d'un masque (6) positionné à une certaine distance (17) après le disque rotatif (1) et comprenant une pluralité de fentes de masque (7) avec une forme particulière, de la lumière diffractée par le disque rotatif (1) ; et

la génération, par l'intermédiaire d'une unité optoélectronique (8), d'un signal périodique avec une première résolution donnée en utilisant une quantité de lumière atteignant l'unité optoélectronique (8) après avoir passé à travers le disque rotatif (1) et le masque (6), ladite quantité de lumière étant dépendante de la rotation du disque rotatif (1) ; et

**caractérisé en ce que** le procédé comprend en outre :

la conversion, par l'intermédiaire de l'unité optoélectronique (8), dudit signal périodique généré en une impulsion électronique qui est traitée pour obtenir une sortie finale avec une seconde résolution donnée, ladite sortie finale étant utilisée pour calculer la vitesse de l'axe de rotation ; et

**en ce que**

la forme des fentes de masque (7) est calculée en effectuant une transformée de Fourier sur une équation de convolution reliant une fonction H, une fonction F et une fonction sinusoïdale, en ignorant les effets de diffraction se produisant dans le disque rotatif (1), de sorte que ledit signal périodique généré soit un signal sinusoïdal pur, où la fonction *H* définit la forme rectangulaire des fentes de disque (2) et la fonction F définit la forme des fentes de masque (7), dans lequel ledit calcul de la forme des fentes de masque (7) est effectué en utilisant l'équation suivante $(F ∗ H)(t) = \int F(x)H(X - T)dx = c(1 + \sin Nt)$, dans laquelle seule la partie positive de la fonction sinusoïdale est considérée, où c est une constante, et N est la première résolution du signal périodique généré.

2. Procédé selon la revendication 1, dans lequel l'émission du faisceau lumineux (3) inclut l'émission du faisceau lumineux (3) à partir d'une diode électroluminescente ou d'une diode laser.

3. Procédé selon l'une quelconque des revendications 1 à 2, dans lequel la génération du signal périodique inclut la génération du signal périodique à partir d'un ensemble de photodiodes.

4. Procédé pour calculer la forme de fentes de masque d'un codeur incrémental optique, comprenant :

l'émission, par l'intermédiaire d'une source de lumière (4), d'un faisceau lumineux (3), ledit faisceau lumineux étant collimaté par une lentille (5) et atteignant un disque rotatif (1) produisant un effet de diffraction, ledit disque rotatif (1) étant positionné perpendiculairement à un axe de rotation, fixée à ce dernier, et tournant à la même vitesse, ledit disque rotatif (1) ayant une première partie dans sa périphérie comprenant une pluralité de fentes de disque (2) ayant une forme rectangulaire permettant à la lumière de passer à travers et une seconde partie ne permettant pas à la lumière de passer à travers ;

la réception, par l'intermédiaire d'un masque (6) positionné à une certaine distance (17) après le disque rotatif (1) et comprenant une pluralité de fentes de masque (7) avec une forme particulière, de la lumière diffractée par le disque rotatif (1) ; et

la génération, par l'intermédiaire d'une unité optoélectronique (8), d'un signal périodique avec une première résolution donnée en utilisant une quantité de lumière atteignant l'unité optoélectronique (8) après avoir passé à travers le disque rotatif (1) et le masque (6), ladite quantité de lumière étant dépendante de la rotation du disque rotatif (1) ; et **caractérisé en ce que** le procédé comprend en outre :

> la conversion, par l'intermédiaire de l'unité optoélectronique (8), dudit signal périodique généré en une impulsion électronique qui est traitée pour obtenir une sortie finale avec une seconde résolution donnée, ladite sortie finale étant utilisée pour calculer la vitesse de l'axe de rotation ; et **en ce que** la forme des fentes de masque (7) est calculée en effectuant une transformée de Fourier sur une équation de convolution reliant une fonction H, une fonction $F$ et une fonction sinusoïdale, en considérant les effets de diffraction se produisant dans le disque rotatif (1), de sorte que ledit signal périodique généré soit un signal sinusoïdal pur, où la fonction $H$ définit la forme rectangulaire des fentes de disque (2) et la fonction F définit la forme des fentes de masque (7), dans lequel ledit calcul de la forme des fentes de masque (7) est effectué en utilisant l'équation suivante $(H * Kd * F)(t) = c(d) + A(d) \sin Nt,$ dans laquelle les parties positives et négatives de la fonction sinusoïdale sont considérées, où c(d) est une constante qui dépend de la distance entre le masque (6) et le disque rotatif (1) en tenant compte des effets de diffraction, $A(d)$ est l'amplitude qui dépend de la distance entre le masque (6) et le disque (1), et N est la première résolution du signal périodique généré.

5. Procédé selon la revendication 4, dans lequel l'émission du faisceau lumineux (3) inclut l'émission du faisceau lumineux (3) à partir d'une diode électroluminescente ou d'une diode laser.

6. Procédé selon l'une quelconque des revendications 4 à 5, dans lequel la génération du signal périodique inclut la génération du signal périodique à partir d'un ensemble de photodiodes.

**Fig. 1**

9

a

2

2

2

H(x)                              t=0                              x

2                          2                          2

H(x-t)                          t=a/4                          x

## Fig. 2

10

7              7

F(x)                                                              x

## Fig. 3

H(x)    F(x)                          t=0                              X

$(H * F)(t)$                                                            t

## Fig. 4

H(x)    F(x)                    t=a/2                              X

11

$(H * F)(t)$                                                           t

## Fig. 5

12

$(H * F)(t)$                                                           t

## Fig. 6

**Fig. 7**

**Fig. 8**

F(x)

H(x)

x

:15

$(H * F)(t)$

t

**Fig. 9**

F(x)

H(x)

x

$(H * F)(t)$

t

**Fig. 10**

F(x)

H(x)

x

$(H * F)(t)$

t

## Fig. 11

7

## Fig. 12

EP 3 527 953 B1

F(x)

**Fig. 13**

$(H * F)(t)$      t

**Fig. 14**

15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0714015 A2
- US 3674372 A
- US 20070028476 A1
- US 20070187581 A1
- US 5994692 A
- EP 0547270 A1
- EP 1439375 A2
- JP 2007183251 A